# EUROPEAN PATENT APPLICATION

(11) **EP 3 705 206 A1**
(43) Date of publication of application: **09.09.2020**
(21) Application number: 18872592.3
(22) Date of filing: 22.10.2018
(51) Int. Cl.: B22F 3/105, B22F 3/16, B29C 64/153, B29C 64/214, B29C 64/255, B29C 64/295, B33Y 10/00, B33Y 30/00, B33Y 40/10, B29C 64/314

(54) **THREE-DIMENSIONAL SHAPING DEVICE AND THREE-DIMENSIONAL SHAPING METHOD**

(30) Priority: 31.10.2017 JP 2017211058
(71) Applicant: IHI Corporation, Tokyo 135-8710 (JP)
(72) Inventor: YAMADA Masato, Tokyo 135-8710 (JP); MOURI Masashi, Tokyo 135-8710 (JP); KOZUE Yuki, Tokyo 135-8710 (JP)
(74) Representative: Grünecker Patent- und Rechtsanwälte PartG mbB
(86) International application number: PCT/JP2018/039173
(87) International publication number: WO 2019/087845

(57) **Abstract**

An additive manufacturing device performs manufacturing of an additively manufactured article by supplying a powder material to an irradiation region of an electron beam, laying and leveling the powder material, irradiating the powder material with the electron beam, and melting the powder material. The additive manufacturing device includes a beam emitting unit emitting the electron beam and irradiating the powder material with the electron beam, an accommodation tank capable of accommodating the powder material and supplying the powder material to the irradiation region of the electron beam, and a first heater attached to the accommodation tank and heating the powder material accommodated in the accommodation tank.

## Description

### Technical Field

The present disclosure describes an additive manufacturing device and an additive manufacturing method for manufacturing an additively manufactured article.

### Background Art

Japanese Unexamined Patent Publication No. 2016-107554 discloses an additive manufacturing device and an additive manufacturing method. In the device and the method for manufacturing an additively manufactured article described in the publication, a powder material is melted by irradiating the powder material with laser light as an energy beam and the melted powder material is solidified thereafter. In the device and the method, a heater for heating a floor portion on an outer side of an irradiation region of the laser light is utilized. In the device and the method, a speed of manufacturing an article is increased by heating the powder material which has been carried to a place in front of the irradiation region.

### Citation List

### Patent Literature

Patent Literature 1: Japanese Unexamined Patent Publication No. 2016-107554

### Summary of Invention

### Technical Problem

In the additive manufacturing device and the additive manufacturing method described above, it is difficult to cope with a case in which a large amount of powder material is required to be supplied to an irradiation region, a case in which a supply amount of a powder material fluctuates, or the like. For example, depending on a situation of the irradiation region, there are cases in which more powder material is required to be supplied to the irradiation region than usual. In such a case, there may be insufficient powder material only with regard to the powder material carried to a place in front of the irradiation region. Therefore, manufacturing of an article cannot proceed smoothly.

Here, it is desired to develop an additive manufacturing device and an additive manufacturing method capable of smoothly performing manufacturing of an article by supplying a number of portions of heated powder material to an irradiation region.

### Solution to Problem

According to an aspect of the present disclosure, there is provided an additive manufacturing device performing manufacturing of an additively manufactured article by supplying a powder material to an irradiation region of an energy beam, laying and leveling the powder material, irradiating the powder material with the energy beam, and melting the powder material. The additive manufacturing device includes a beam emitting unit emitting the energy beam and irradiating the powder material with the energy beam, an accommodation tank capable of accommodating the powder material and supplying the powder material to the irradiation region of the energy beam, and a heating unit attached to the accommodation tank and heating the powder material accommodated in the accommodation tank.

### Effects of Invention

The additive manufacturing device of the present disclosure can supply a number of portions of heated powder material to the irradiation region. Therefore, manufacturing of an article can be performed smoothly.

### Brief Description of Drawings

FIG. 1 is a schematic view illustrating a configuration of an additive manufacturing device of the present disclosure.
FIG. 2 is a view describing a heater included in the additive manufacturing device in FIG. 1.
FIG. 3 is another view describing the heater included in the additive manufacturing device in FIG. 1.
FIG. 4 is another view describing the heater included in the additive manufacturing device in FIG. 1.
FIG. 5 is a view describing preliminary heating performed by the additive manufacturing device in FIG. 1.
FIG. 6 is a view describing heating processing performed by the additive manufacturing device and an additive manufacturing method of the present disclosure.
FIG. 7 is a flowchart showing main steps included in processing of manufacturing an article performed by the additive manufacturing device and the additive manufacturing method of the present disclosure.

### Description of Embodiment

According to an aspect of the present disclosure, there is provided an additive manufacturing device performing manufacturing of an additively manufactured article by supplying a powder material to an irradiation region of an energy beam, laying and leveling the powder material, irradiating the powder material with the energy beam, and melting the powder material. The additive manufacturing device includes a beam emitting unit emitting the energy beam and irradiating the powder material with the energy beam, an accommodation tank capable of accommodating the powder material and supplying the powder material to the irradiation region of the energy beam, and a heating unit attached to the accommodation tank and heating the powder material accommodated in the accommodation tank. According to this additive manufacturing device, the powder material accommodated in the accommodation tank is heated by the first heating unit. As a result, a number of portions of heated powder material can be supplied to the irradiation region. Therefore, even when there is a need to supply a number of portions of powder material to the irradiation region, such as a case in which a powder material scatters, manufacturing of an article can be performed smoothly.

The additive manufacturing device according to the aspect of the present disclosure may further include a second heating unit attached to a floor portion for the powder material discharged from the accommodation tank to be placed on and heating the powder material placed on the floor portion, a powder supply mechanism provided in the irradiation region in a manner of being movable in a horizontal direction and supplying the powder material placed on the floor portion to the irradiation region, and a third heating unit attached to the powder supply mechanism and heating the powder material to be supplied to the irradiation region. In this case, the powder material placed on the floor portion by being discharged from the accommodation tank is heated by the second heating unit. The powder material supplied from the floor portion to the irradiation region is heated by the third heating unit. As a result, the powder material supplied to the irradiation region after being discharged from the accommodation tank can be heated continuously. Therefore, the powder material can be heated sufficiently, and thus scattering of the powder material can be curbed.

According to another aspect of the present disclosure, there is provided an additive manufacturing method for performing manufacturing of an additively manufactured article by supplying a powder material to an irradiation region of an energy beam, laying and leveling the powder material, irradiating the powder material with the energy beam, and melting the powder material. The additive manufacturing method includes a heating step of heating the powder material accommodated in an accommodation tank using the accommodation tank provided with a heating unit, and a manufacturing step of manufacturing the article by irradiating the powder material with the energy beam after the powder material discharged from the accommodation tank is moved to the irradiation region of the energy beam. According to this additive manufacturing method, the powder material accommodated in the accommodation tank is heated by the heating unit. As a result, when a powder material scatters due to irradiation of the energy beam, a heated powder material can be sufficiently supplied to the irradiation region in which scattering has occurred. Therefore, even when a powder material scatters, manufacturing of an article can be performed smoothly.

The additive manufacturing device according to the aspect of the present disclosure may further include a second heating unit attached to a floor portion for the powder material discharged from the accommodation tank to be placed on and heating the powder material placed on the floor portion.

The additive manufacturing device according to the aspect of the present disclosure may further include a powder supply mechanism provided in the irradiation region in a manner of being movable in a horizontal direction and supplying the powder material placed on the floor portion for the powder material discharged from the accommodation tank to the irradiation region to be placed on, and a third heating unit attached to the powder supply mechanism and heating the powder material to be supplied to the irradiation region.

According to the aspect of the present disclosure, the first heating unit may be disposed inside the accommodation tank. The first heating unit may be disposed away from an inner wall surface of the accommodation tank.

Hereinafter, an additive manufacturing device and an additive manufacturing method of the present disclosure will be described with reference to the drawings. In description of the drawings, the same reference signs are applied to the same elements, and duplicate description will be omitted.

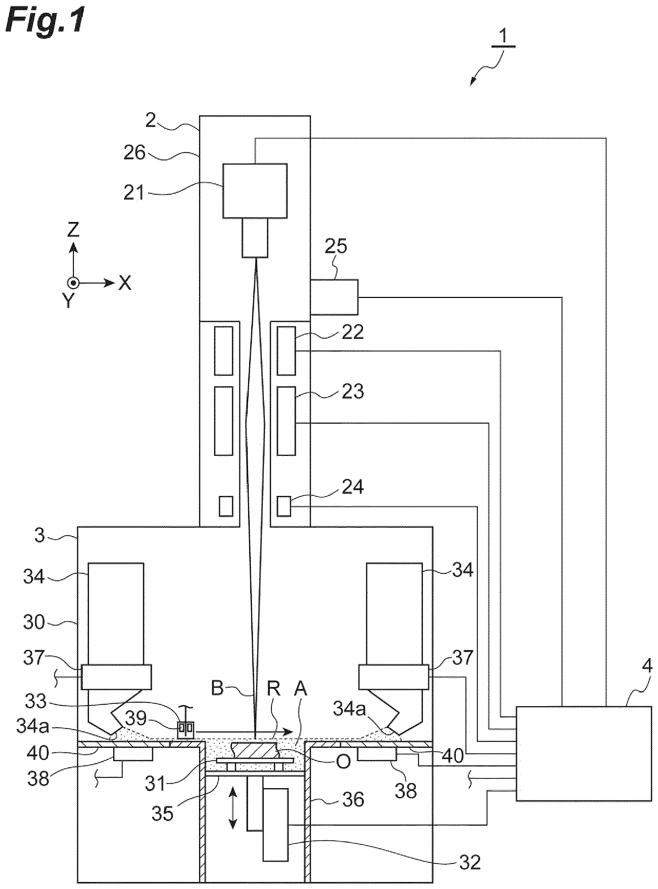

FIG. 1 is a schematic view illustrating a configuration of the additive manufacturing device of the present disclosure. An additive manufacturing device 1 supplies a powder material A to an irradiation region R of an electron beam B and lays and levels the powder material A thereafter. Further, the additive manufacturing device 1 melts the powder material A by irradiating the powder material A with the electron beam B. The additive manufacturing device 1 manufactures an additively manufactured article O through the foregoing operation.

The electron beam B is an energy beam formed due to linear motion of electrons (energetic particles). The irradiation region R of the electron beam B is a region which can be irradiated with the electron beam B. In other words, the irradiation region R is a region of a powder floor used for manufacturing the article O.

The additive manufacturing device 1 repeats a step of performing preliminary heating of the powder material A by irradiating the powder material A with the electron beam B, and a step of manufacturing a part of the article O by irradiating the powder material A with the electron beam B in order to melt the powder material A. The additive manufacturing device 1 repeats these steps to perform manufacturing of the article O in which a solidified powder material is laminated. Preliminary heating is also referred to as preheating. In preliminary heating, before the article O is manufactured, the powder material A is heated at a temperature lower than a melting point of the powder material A. As a result of heating the powder material A through preliminary heating, the powder material A is temporarily sintered. When the powder material A is temporarily sintered, accumulation of negative electric charges in the powder material A due to irradiation with the electron beam B is alleviated. Therefore, occurrence of a smoke phenomenon can be curbed. A smoke phenomenon indicates a phenomenon in which the powder material A scatters at the time of irradiation with the electron beam B.

The additive manufacturing device 1 includes a beam emitting unit 2, a manufacturing unit 3, and a control unit 4. The beam emitting unit 2 emits the electron beam B to the powder material A of the manufacturing unit 3 in response to a control signal of the control unit 4. The beam emitting unit 2 irradiates the powder material A with the electron beam B for preliminary heating of the powder material A. Thereafter, the beam emitting unit 2 irradiates the powder material A with the electron beam B for manufacturing the additively manufactured article O. As a result, the powder material A is melted, is then solidified, and therefore the article O is manufactured progressively. The beam emitting unit 2 stops irradiation with the electron beam B when scattering of the powder material A is detected during manufacturing of the article O. Next, the powder material A is supplied to the irradiation region R. Further, the beam emitting unit 2 restarts irradiation with the electron beam B. Details of a mechanism for detecting scattering of the powder material A will be described below.

The beam emitting unit 2 includes an electron gun portion 21, an aberration coil 22, a focus coil 23, a deflection coil 24, and a scattering detector 25. The electron gun portion 21 is electrically connected to the control unit 4. The electron gun portion 21 operates in response to a control signal from the control unit 4. The electron gun portion 21 emits the electron beam B. For example, the electron gun portion 21 emits the electron beam B downward. The aberration coil 22 is electrically connected to the control unit 4. The aberration coil 22 operates in response to a control signal from the control unit 4. The aberration coil 22 is installed around the electron beam B emitted from the electron gun portion 21. The aberration coil 22 corrects aberration of the electron beam B. The focus coil 23 is electrically connected to the control unit 4. The focus coil 23 operates in response to a control signal from the control unit 4. The focus coil 23 is installed around the electron beam B emitted from the electron gun portion 21. The focus coil 23 causes the electron beam B to converge by performing adjustment such that there is a convergent state at an irradiation position of the electron beam B. The deflection coil 24 is electrically connected to the control unit 4. The deflection coil 24 operates in response to a control signal from the control unit 4. The deflection coil 24 is installed around the electron beam B emitted from the electron gun portion 21. The deflection coil 24 adjusts the irradiation position of the electron beam B in response to a control signal. The deflection coil 24 performs electromagnetic beam deflection. Therefore, a scanning speed of the deflection coil 24 is faster than a scanning speed of mechanical beam deflection. The electron gun portion 21, the aberration coil 22, the focus coil 23, and the deflection coil 24 are installed inside a column 26 exhibiting a tubular shape, for example. Installation of the aberration coil 22 may be omitted.

The scattering detector 25 detects that scattering of the powder material A has occurred due to irradiation of the powder material A with the electron beam B. That is, the scattering detector 25 detects occurrence of a smoke phenomenon when the powder material A is irradiated with the electron beam B. A smoke phenomenon indicates a phenomenon in which the powder material A is blown upward in a mist state due to scattering of the powder material A. For example, the scattering detector 25 is an X-ray detector. The scattering detector 25 is electrically connected to the control unit 4. The scattering detector 25 outputs a detection signal to the control unit 4. The scattering detector 25 detects X-rays generated when smoke is generated. The scattering detector 25 detects that scattering of the powder material A has occurred based on the fact that the number of instances of detection per unit time added every time X-rays are detected exceeds a predetermined threshold. For example, the scattering detector 25 is attached to the column 26. The scattering detector 25 is disposed toward the electron beam B. The scattering detector 25 may be provided at a position in the vicinity of the irradiation region of the powder material A. The scattering detector 25 need only be able to detect scattering of the powder material A, and an instrument, a sensor, or the like other than an X-ray detector may be used.

The manufacturing unit 3 is a part for manufacturing a desired article O. The manufacturing unit 3 accommodates the powder material A inside a chamber 30. The manufacturing unit 3 is provided below the beam emitting unit 2. The manufacturing unit 3 includes the chamber 30 having a box shape. Inside the chamber 30, the manufacturing unit 3 includes a plate 31, an elevator 32, a powder supply mechanism 33, an accommodation tank 34, a first heater 37, a second heater 38, and a third heater 39. The chamber 30 is joined to the column 26. An internal space of the chamber 30 communicates with an internal space of the column 26 in which the electron gun portion 21 is disposed.

The plate 31 supports the article O being manufactured. The article O is manufactured progressively on the plate 31. The plate 31 supports the article O being manufactured progressively. An upper surface of the plate 31 and a region above the upper surface is the irradiation region R of the electron beam B. The plate 31 is a plate body. For example, the shape of the plate 31 is a rectangular shape or a circular shape. The plate 31 is disposed on an extended line in an emission direction of the electron beam B. For example, the plate 31 is provided in a horizontal direction. The plate 31 is disposed such that it is supported by an elevating stage 35 installed therebelow. The plate 31 moves in an up-down direction together with the elevating stage 35. The elevator 32 elevates the elevating stage 35 and the plate 31. The elevator 32 is electrically connected to the control unit 4. The elevator 32 operates in response to a control signal from the control unit 4. For example, the elevator 32 moves the plate 31 upward together with the elevating stage 35 in an initial stage of manufacturing of the article O. The elevator 32 moves the plate 31 downward every time the powder material A which has undergone melting and solidifying on the plate 31 is laminated. The elevator 32 need only be a mechanism capable of elevating the plate 31, and any mechanism may be used.

The plate 31 is disposed inside a manufacturing tank 36. The manufacturing tank 36 is installed in a lower portion inside the chamber 30. For example, the shape of the manufacturing tank 36 is a tubular shape. In addition, the cross-sectional shape of the manufacturing tank 36 is a rectangular shape or a circular shape. The manufacturing tank 36 extends in a moving direction of the plate 31. The inner shape of the manufacturing tank 36 follows the outer shape of the elevating stage 35. In order to curb leakage of the powder material A downward from the elevating stage 35, a seal material may be provided between the manufacturing tank 36 and the elevating stage 35.

The powder supply mechanism 33 supplies the powder material A to a part on the plate 31. In addition, the powder supply mechanism 33 levels the surface of the powder material A. The powder supply mechanism 33 functions as a recoater. For example, the powder supply mechanism 33 is a member having a rod shape or a plate shape. The powder supply mechanism 33 moves in the horizontal direction in the irradiation region R, so that the powder material A is supplied to the irradiation region R of the electron beam B and the surface of the powder material A is leveled. The powder supply mechanism 33 moves in accordance with driving of an actuator (not illustrated). The accommodation tank 34 accommodates the powder material A. A discharging port 34a for discharging the powder material A is formed in a lower portion of the accommodation tank 34. The powder material A discharged through the discharging port 34a is supplied to a floor portion 40. The height of the floor portion 40 is the same as the height of an upper end of the manufacturing tank 36. The floor portion 40 continues to an upper portion of the manufacturing tank 36. The powder material A on the floor portion 40 is supplied to a part on the plate 31 by the powder supply mechanism 33. The inside of the chamber 30 is in a vacuum state or a substantially vacuum state. Mechanisms other than the powder supply mechanism 33 and the accommodation tank 34 may be used as mechanisms for supplying the powder material A to a part on the plate 31.

The powder material A includes a number of powder bodies. For example, the powder material A is a metal powder. In addition, the powder material A need only be able to be melted and solidified through irradiation with the electron beam B, and grains having a larger grain size than a powder may be used.

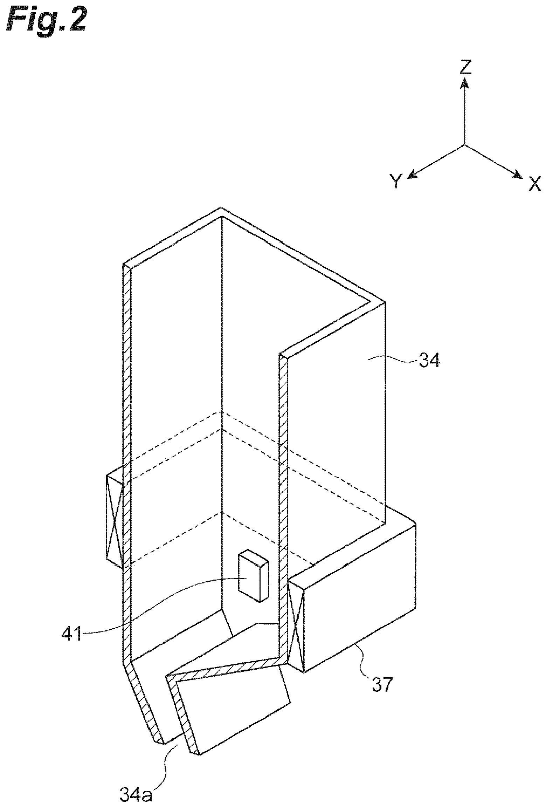

The first heater 37 is attached to the accommodation tank 34. The first heater 37 is a heating unit for heating the powder material A accommodated in the accommodation tank 34. The first heater 37 is electrically connected to the control unit 4. The first heater 37 starts operation in response to an operation signal of the control unit 4. In addition, the first heater 37 stops operation in response to an operation signal of the control unit 4. For example, as illustrated in FIG. 2, the first heater 37 is attached to the outer side of the accommodation tank 34. The first heater 37 generates heat such that the powder material A is heated with the accommodation tank 34 therebetween. For example, the first heater 37 is an induction heating-type heater or a resistance heating-type heater. The accommodation tank 34 is formed of a material having favorable heat conductivity. For example, the accommodation tank 34 is formed of metal such as stainless steel.

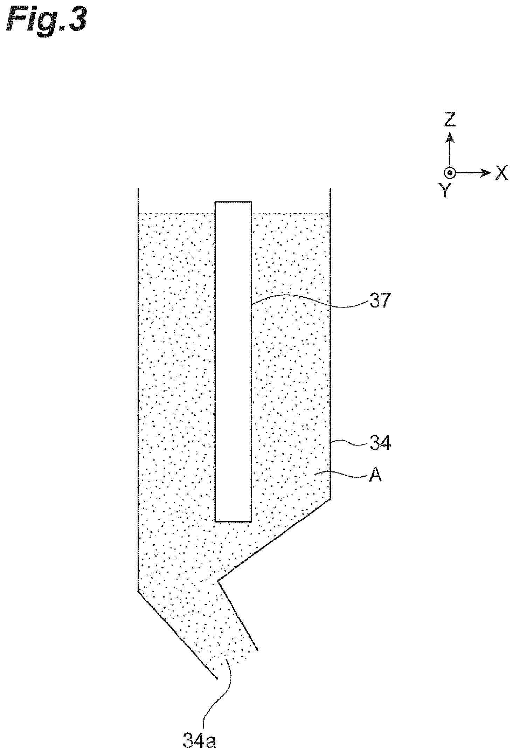

As illustrated in FIGS. 1 and 2, the first heater 37 is attached to a part of a side wall of the accommodation tank 34. For example, the first heater 37 may be attached to the entire side wall of the accommodation tank 34. The first heater 37 may be provided at a position other than the outer side of the accommodation tank 34. For example, the first heater 37 may be disposed inside the accommodation tank 34. Specifically, as illustrated in FIG. 3, the first heater 37 exhibits a rod shape and may be disposed vertically inside the accommodation tank 34.

A temperature sensor 41 is provided in the accommodation tank 34. The temperature sensor 41 detects the temperature of the accommodated powder material A. For example, as illustrated in FIG. 2, the temperature sensor 41 is provided inside the accommodation tank 34. For example, the temperature sensor 41 is a thermocouple or the like. The temperature sensor 41 may be built into the first heater 37.

As illustrated in FIG. 1, the second heater 38 is attached to the floor portion 40. The second heater 38 functions as a second heating unit. The second heating unit heats the powder material A placed on the floor portion 40. The second heater 38 is electrically connected to the control unit 4. The second heater 38 starts operation in response to an operation signal of the control unit 4. The second heater 38 stops operation in response to an operation signal of the control unit 4. For example, the second heater 38 is attached to a lower surface side of the floor portion 40. The second heater 38 generates heat such that the powder material A is heated with the floor portion 40 therebetween. For example, the second heater 38 is an induction heating-type heater or a resistance heating-type heater. The floor portion 40 is formed of a material having favorable heat conductivity. For example, the floor portion 40 is formed of metal such as stainless steel. A temperature sensor may be built into the second heater 38. The temperature sensor detects the temperature of the floor portion 40, and therefore temperature information can be used for temperature control of the powder material A. As a result, the powder material A can be heated at a suitable temperature. The temperature of the powder material A on the floor portion 40 may be detected by providing the temperature sensor at a position other than the second heater 38.

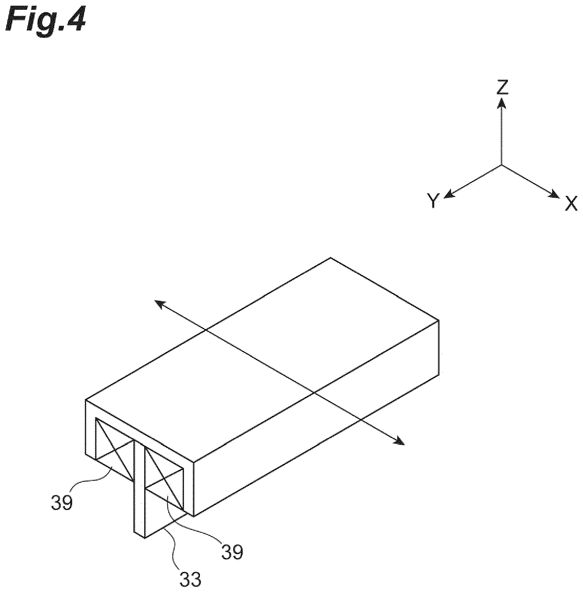

As illustrated in FIG. 1, the third heater 39 is attached to the powder supply mechanism 33. The third heater 39 functions as a third heating unit. The third heating unit heats the powder material A in the irradiation region R. The third heater 39 is electrically connected to the control unit 4. The third heater 39 starts operation in response to an operation signal of the control unit 4. The third heater 39 stops operation in response to an operation signal of the control unit 4. For example, as illustrated in FIG. 4, the third heater 39 is built into the powder supply mechanism 33. The third heater 39 generates heat such that the powder material A in the irradiation region R is heated. For example, the third heater 39 is an induction heating-type heater or a resistance heating-type heater. The third heater 39 may heat the powder material A through radiation of heat. A temperature sensor may be built into the third heater 39. The third heater 39 into which a temperature sensor is built can detect the temperature of the irradiation region R. As a result, the temperature information can be used for temperature control of the powder material A. Therefore, the powder material A can be heated at a suitable temperature. The temperature sensor may detect the temperature of the powder material A in the irradiation region R by being provided at a position other than the third heater 39.

The control unit 4 controls the additive manufacturing device 1 in its entirety. The control unit 4 is an electronic control unit. For example, the control unit 4 may be a computer including a CPU, a ROM, and a RAM. The control unit 4 performs elevating control of the plate 31, operation control of the powder supply mechanism 33, emission control of the electron beam B, operation control of the deflection coil 24, detection of scattering of the powder material A, and operation control of the first heater 37, the second heater 38, and the third heater 39. Regarding elevating control of the plate 31, the control unit 4 adjusts the vertical position of the plate 31. In elevating control, the control unit 4 outputs a control signal to the elevator 32 such that the elevator 32 operates. Regarding operation control of the powder supply mechanism 33, the control unit 4 supplies the powder material A to a part on the plate 31 and levels the supplied powder material A. In operation control of the powder supply mechanism 33, the control unit 4 causes the powder supply mechanism 33 to operate before the electron beam B is emitted. Regarding emission control of the electron beam B, the control unit 4 causes the electron gun portion 21 to emit the electron beam B. In emission control, the control unit 4 outputs a control signal to the electron gun portion 21.

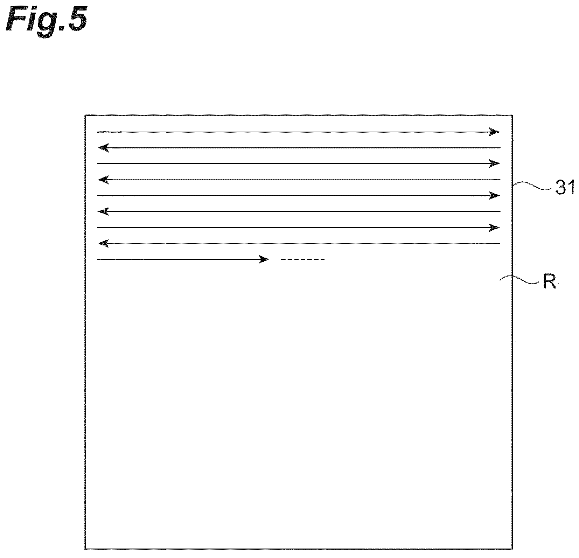

Regarding operation control of the deflection coil 24, the control unit 4 controls the irradiation position of the electron beam B. In operation control of the deflection coil 24, the control unit 4 outputs a control signal to the deflection coil 24. For example, when preliminary heating of the powder material A is performed, the control unit 4 performs irradiation with the electron beam B for scanning the plate 31 with the electron beam B by outputting a control signal to the deflection coil 24 of the beam emitting unit 2. For example, as illustrated in FIG. 5, the control unit 4 performs irradiation with the electron beam B by moving the irradiation position of the electron beam B to reciprocate left and right such that the powder material A disposed on the entire surface of the irradiation region R on the plate 31 is heated evenly. Irradiation with the electron beam B for preliminary heating may be performed only once with respect to the entire surface of the irradiation region R. In addition, irradiation with the electron beam B for preliminary heating may be repetitively performed a plurality of times with respect to the entire surface of the irradiation region R. The powder material A is heated by performing preliminary heating. The heated powder material A is temporarily sintered, and therefore accumulation of negative electric charges due to irradiation with the electron beam B is reduced. As a result, occurrence of scattering of the powder material A is curbed. In other words, occurrence of a smoke phenomenon is curbed. In FIG. 5, for the sake of convenience of description, illustration of the powder material A is omitted.

As illustrated in FIG. 1, when the article O is manufactured, the control unit 4 uses three-dimensional computer-aided design (CAD) data of the article O to be manufactured, for example. The three-dimensional CAD data of the article O is data which is input in advance and indicates the shape of the article O. The control unit 4 or a computation device (not illustrated) generates two-dimensional slice data based on the three-dimensional CAD data. Slice data is an aggregate of a number of pieces of data. Each piece of the data included in the slice data indicates the shape of a horizontal cross-section of the article O to be manufactured, for example. In addition, each piece of the data corresponds to the vertical position in a direction perpendicular to the cross section. The control unit 4 decides a region in which the powder material A is irradiated with the electron beam B based on the slice data. The control unit 4 outputs a control signal to the deflection coil 24 in accordance with the decided region. As a result of the control unit 4 outputting a control signal to the deflection coil 24 of the beam emitting unit 2, the beam emitting unit 2 irradiates a manufacturing region corresponding to the cross-sectional shape of the article O with the electron beam B.

The control unit 4 detects whether or not scattering of the powder material A has occurred. The control unit 4 functions as a detection unit for detecting whether or not scattering of the powder material A has occurred when the powder material A is irradiated with the electron beam B. Scattering of the powder material A means a smoke phenomenon of the powder material A described above. The presence or absence of scattering of the powder material A means the presence or absence of occurrence of a smoke phenomenon. The control unit 4 detects the presence or absence of scattering of the powder material A based on a detection signal of the scattering detector 25. When a detection signal of the scattering detector 25 includes a signal component indicating occurrence of scattering, the control unit 4 recognizes that scattering of the powder material A has occurred. In addition, the control unit 4 stores information indicating occurrence of scattering of the powder material A.

The control unit 4 performs operation control of the first heater 37, the second heater 38, and the third heater 39. The control unit 4 performs heating control by outputting an operation signal to the first heater 37, the second heater 38, and the third heater 39. As a result of heating control, the first heater 37, the second heater 38, and the third heater 39 generate heat. Regarding heating control, the control unit 4 detects each of the temperature at a position heated by the first heater 37, the temperature at a position heated by the second heater 38, and the temperature at a position heated by the third heater 39 using temperature sensors. The control unit 4 may perform feedback control of the first heater 37, the second heater 38, and the third heater 39 based on a detected signal (temperature). As a result, the temperature at a position heated by the first heater 37, the temperature at a position heated by the second heater 38, and the temperature at a position heated by the third heater 39 approximate target temperature, and therefore accurate heating control can be performed.

As illustrated in FIG. 1, the control unit 4 executes all of elevating control of the plate 31, operation control of the powder supply mechanism 33, emission control of the electron beam B, operation control of the deflection coil 24, detection of scattering of the powder material A, and operation control of the first heater 37, the second heater 38, and the third heater 39. Some or all of the control and detection described above may be executed by a controller other than the control unit 4.

Next, operation of the additive manufacturing device 1 and the additive manufacturing method of the present disclosure will be described.

Operation of the additive manufacturing device 1 and the additive manufacturing method of the present disclosure include a step of heating the powder material A using the first heater 37, the second heater 38, and the third heater 39. The heated powder material A is supplied to the irradiation region R. Next, preliminary heating of the powder material A and manufacturing of the article O are performed by irradiating the powder material A with the electron beam B. In operation of the additive manufacturing device 1 and the additive manufacturing method of the present disclosure, the laminated article O is manufactured by performing the steps of the processing repetitively.

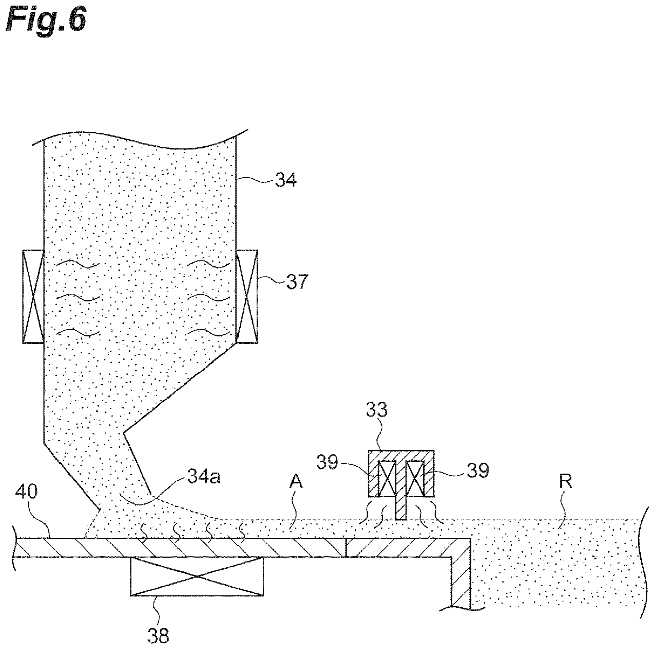

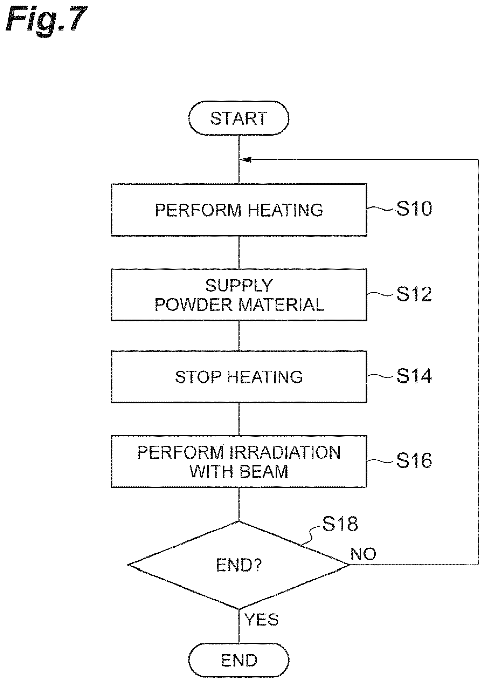

FIG. 6 is a view for describing heating processing of the powder material A in operation of the additive manufacturing device 1 and the additive manufacturing method of the present disclosure. FIG. 7 is a flowchart showing main steps included in processing of manufacturing the article O in the additive manufacturing device 1 and the additive manufacturing method of the present disclosure. With reference to FIGS. 6 and 7, operation of the additive manufacturing device 1 and the additive manufacturing method of the present disclosure will be described specifically.

As shown in Step S10 of FIG. 7, heating processing of the powder material A is performed. In the following description, Step S10 will be simply indicated as "S10". The same applies to each of the steps after S10. In the heating processing, the powder material A before being supplied to the irradiation region R is heated. The heating processing in S10 is not preliminary heating which is performed before the powder material A is melted.

For example, as illustrated in FIG. 6, the powder material A accommodated in the accommodation tank 34 is heated by the first heater 37. That is, the control unit 4 causes the first heater 37 to operate by outputting an operation signal to the first heater 37. As a result, the first heater 37 generates heat, so that the powder material A is heated due to heat generated by the first heater 37. The heating temperature of the first heater 37 is lower than a temperature leading to temporary sintering of the powder material A. According to such heating of the powder material A, temporary sintering of the powder material A does not occur. Therefore, fluidity of the powder material A can be prevented from being impaired due to temporary sintering.

In addition, moisture of the powder material A is removed by heating the powder material A accommodated inside the accommodation tank 34. In addition, a degassing effect of the powder material A occurs. That is, when the powder material A is moist, moisture included in the powder material A can be eliminated by heating the powder material A. In addition, when impurities adhere to the powder material A, the impurities are vaporized by heating the powder material A, so that the impurities can be eliminated from the powder material A. As a result, manufacturing of a high-quality article O can be performed.

The powder material A discharged through the discharging port 34a of the accommodation tank 34 is provided on the floor portion 40. The powder material A on the floor portion 40 is heated by the second heater 38. The control unit 4 causes the second heater 38 to operate by outputting an operation signal to the second heater 38. As a result, the second heater 38 generates heat. The powder material A is heated due to heat of the second heater 38. The heating temperature of the second heater 38 is lower than a temperature leading to temporary sintering of the powder material A. According to such heating of the powder material A, temporary sintering of the powder material A does not occur. Therefore, fluidity of the powder material A can be prevented from being impaired due to temporary sintering.

The processing shifts to S12 in FIG. 7. In S12, processing of supplying the powder material A is performed. Supply processing includes processing of transferring the powder material A to the irradiation region R, and processing of laying and leveling the powder material A transferred to the irradiation region R. The control unit 4 outputs an operation signal to an actuator or the like which drives the powder supply mechanism 33. As a result, the powder supply mechanism 33 moves in the horizontal direction. The control unit 4 outputs an operation signal to the third heater 39. As a result, the third heater 39 generates heat. Due to heat generated by the third heater 39, the powder material A is transferred to the irradiation region R by the powder supply mechanism 33 while being heated by the third heater 39.

The powder material A is heated continuously by the first heater 37, the second heater 38, and the third heater 39 during a period of time after being accommodated in the accommodation tank 34 until being supplied to the irradiation region R. As a result, the powder material A is already heated sufficiently before preliminary heating is performed. Therefore, occurrence of scattering of the powder material A is curbed at the time of irradiation with the electron beam B. In other words, occurrence of a smoke phenomenon is curbed.

Timings of starting operation of the first heater 37, the second heater 38, and the third heater 39 may be the same as each other. In addition, the timings of starting operation of the first heater 37 and the second heater 38 may be the same as each other, and the timing of starting operation of the third heater 39 may be the same as the timing of starting operation of the powder supply mechanism 33.

The processing shifts to S14. In S14, heating stopping processing is performed. The heating stopping processing stops operation of the first heater 37, the second heater 38, and the third heater 39. The control unit 4 stops outputting a control signal to the first heater 37, the second heater 38, and the third heater 39. As a result, operation of the first heater 37, the second heater 38, and the third heater 39 stops.

The processing shifts to S16. In S16, irradiation processing with the electron beam B is performed. In the irradiation processing, preliminary heating of the irradiation region R and manufacturing of the article O are performed by emitting the electron beam B from the beam emitting unit 2. The control unit 4 causes the electron gun portion 21 to emit the electron beam B by outputting a control signal to the beam emitting unit 2. As a result, the irradiation region R or the manufacturing region is irradiated with the electron beam B. When the irradiation processing is performed, operation of the first heater 37, the second heater 38, and the third heater 39 is stopped. Therefore, the electron beam B is not affected by a magnetic field generated through operation of the first heater 37, the second heater 38, or the third heater 39. Therefore, irradiation with the electron beam B can be performed accurately.

As illustrated in FIG. 5, in the irradiation processing for preliminary heating, the plate 31 is scanned with the electron beam B by causing the irradiation position of the electron beam B to reciprocate left and right with respect to the plate 31. That is, in the irradiation processing as preliminary heating, irradiation is performed with the electron beam B such that the powder material A in the irradiation region R on the plate 31 is heated evenly. In the irradiation processing as preliminary heating, irradiation of the irradiation region R may be repeated. FIG. 5 is a view of the plate 31 viewed from above. For the sake of convenience of description, FIG. 5 illustrates only the plate 31. In FIG. 5, illustration of the powder material A is omitted.

Irradiation with the electron beam B for preliminary heating may be performed with respect to the irradiation region R and the manufacturing region. For example, first, as illustrated in FIG. 5, irradiation with the electron beam B is performed with respect to the entire surface of the irradiation region R. Next, irradiation with the electron beam B is performed with respect to the manufacturing region of the article O. Irradiation with the electron beam B may be repeated a plurality of times with respect to the irradiation region R. Similarly, irradiation with the electron beam B may be repeated a plurality of times with respect to the manufacturing region. The range of the manufacturing region is narrower than the range of the irradiation region R. The manufacturing region is a region in which the article O is manufactured. In this case, the manufacturing region may be a region in which the article O is manufactured. In addition, the manufacturing region may be a region approximately the same as the region in which the article O is manufactured. In this manner, preliminary heating is performed with respect to the entire irradiation region R by performing irradiation with the electron beam B with respect to the irradiation region R and the manufacturing region. As a result, the irradiation region R can be in a high-temperature state. In addition, occurrence of scattering of the powder material A can be curbed effectively by increasing the heating amount of preliminary heating with respect to the manufacturing region. In addition, compared to a case in which the entire irradiation region R is subjected to preliminary heating repetitively, an influence of heat on the powder material A can also be alleviated. The powder material A receives an influence of heat caused by heating. An influence of heat on the powder material A includes oxidation, deformation, and a change in chemical composition. Moreover, there is also concern that a change in mechanical characteristics may occur in the powder material A due to the change described above. Therefore, a region for irradiation with the electron beam B may be minimum necessary. Therefore, a part of the irradiation region for preliminary heating is limited to the manufacturing region. As a result, an influence of heat on the powder material A can be reduced. Therefore, the powder material A can also be reutilized.

Incidentally, for example, in the irradiation processing for manufacturing the article O, the control unit 4 decides the manufacturing region in which the powder material A is irradiated with the electron beam B based on the slice data of the article O to be manufactured. Further, the control unit 4 causes the beam emitting unit 2 to irradiate the decided manufacturing region with the electron beam B. As a result, in the irradiation processing for manufacturing, one layer constituting the article O is manufactured.

The processing shifts to S18. In S18, it is determined whether or not conditions for ending the control processing are established. A case in which conditions for ending the control processing are established denotes a case in which manufacturing of a desired additively manufactured article O has ended, for example. That is, the foregoing case is a case in which manufacturing of the article O has been completed as a result of the control processing of S10 to S16 performed repetitively. On the other hand, a case in which the conditions for ending the control processing are not established denotes a case in which manufacturing of a desired additively manufactured article O has not been completed, for example.

When it is determined in S18 that the conditions for ending the control processing are not established, the processing returns to S10. On the other hand, when it is determined in S18 that the conditions for ending the control processing are established, a series of control processing in FIG. 7 ends.

As the processing of S10 to S18 shown in FIG. 7 is performed repetitively, the article O is gradually formed into a layer shape. Then, a desired article O is manufactured finally.

As described above, in the additive manufacturing device 1 and the additive manufacturing method of the present disclosure, the powder material A accommodated in the accommodation tank 34 is heated by the first heater 37. According to this heating, a number of portions of the heated powder material A can be supplied to the irradiation region R. Therefore, even when there is a need to supply a number of portions of the powder material A to the irradiation region R, such as a case in which the powder material A scatters, manufacturing of the article O can be performed smoothly.

For example, when the powder material A accommodated in the accommodation tank 34 is not heated, it is difficult to supply a large amount of heated powder material A to the irradiation region R. For example, if scattering of the powder material A occurs due to irradiation with the electron beam B, more powder material A is required to be supplied to the irradiation region R than usual. When the powder material A is not heated, a non-heated cold powder material A is supplied to the irradiation region R. As a result, there is concern that scattering of the powder material A may occur again.

In contrast, in the additive manufacturing device 1 and the additive manufacturing method of the present disclosure, the powder material A is heated using the first heater 37 attached to the accommodation tank 34. As a result, a large amount of powder material A accommodated in the accommodation tank 34 can be heated. Therefore, even when there is a need to supply more powder material A to the irradiation region R than usual because scattering of the powder material A has occurred due to irradiation with the electron beam B, or even when the supply amount of the powder material A fluctuates, the heated powder material A can be supplied to the irradiation region R as much as it is required. Therefore, manufacturing of the article O can be performed smoothly.

A large-sized article O can be manufactured using the powder material A having a high melting point by supplying the heated powder material A to the irradiation region R. In other words, the powder material A can be melted easily through irradiation with the electron beam B by supplying the heated powder material A to the irradiation region R. Therefore, even in a case of manufacturing the article O using the powder material A having a high melting point, high quality can be maintained. In addition, a large-sized article O can also be manufactured.

In the additive manufacturing device 1 and the additive manufacturing method of the present disclosure, the powder material A placed on the floor portion 40 after being discharged from the accommodation tank 34 is heated by the second heater 38. The powder material A supplied from the floor portion 40 to the irradiation region R is heated by the third heater 39. As a result, the powder material A can be heated continuously during a period of time after being discharged from the accommodation tank 34 until being supplied to the irradiation region R. Therefore, the powder material A can be heated sufficiently. As a result, scattering of the powder material A can be curbed.

The additive manufacturing device and the additive manufacturing method of the present disclosure are not limited to the embodiment described above. The additive manufacturing device and the additive manufacturing method of the present disclosure can adopt various deformation forms within a range not departing from the gist disclosed in the claims.

For example, the additive manufacturing device and the additive manufacturing method of the present disclosure described above include the first heater 37, the second heater 38, and the third heater 39. In the additive manufacturing device and the additive manufacturing method of the present disclosure, installation of the second heater 38 and the third heater 39 may be omitted. In this case as well, the powder material A accommodated in the accommodation tank 34 is heated by the first heater 37. As a result, a number of portions of the heated powder material A can be supplied to the irradiation region R. Therefore, even when there is a need to supply a number of portions of the powder material A to the irradiation region R, such as a case in which the powder material A scatters, manufacturing of the article O can be performed smoothly.

The additive manufacturing device and the additive manufacturing method of the present disclosure described above include the second heater 38 and the third heater 39 in addition to the first heater 37. The additive manufacturing device and the additive manufacturing method of the present disclosure may use a heater for performing heating by spraying high-temperature gas to the irradiation region R in place of the second heater 38 and the third heater 39. For example, the powder material A may be heated by spraying inert gas such as helium or argon in a high-temperature state to the irradiation region R of the electron beam B. In this case as well, the powder material A supplied to the irradiation region R is heated by the high-temperature gas. As a result, the powder material A supplied to the irradiation region R after being discharged from the accommodation tank 34 can be heated continuously. Therefore, the powder material A can be heated sufficiently, and thus occurrence of scattering of the powder material can be curbed.

In the additive manufacturing device and the additive manufacturing method of the present disclosure described above, the article O is manufactured using the electron beam B as an energy beam. Regarding the energy beam, an energy beam of a kind other than the electron beam B may be used. For example, the article O may be manufactured using an ion beam as an energy beam.

The additive manufacturing device and the additive manufacturing method of the present disclosure may be applied to a device and a method in which an energy beam such as a laser beam having no electric charges is used as a heat source. When an energy beam having no electric charges is used, scattering of the powder material A does not occur, so that there is no effect of restraining occurrence of scattering. However, as described above, it is possible to perform high-quality manufacturing of the article O using the powder material A having a high melting point. Moreover, a large-sized article O can also be manufactured.

The additive manufacturing device 1 of the present disclosure may include the first heater 37 and the second heater 38, and the third heater 39 may be omitted. In addition, the additive manufacturing device 1 of the present disclosure may include the first heater 37 and the third heater 39, and the second heater 38 may be omitted.

### Reference Signs List

- 1: Additive manufacturing device
- 2: Beam emitting unit
- 3: Manufacturing unit
- 4: Control unit
- 21: Electron gun portion
- 22: Aberration coil
- 23: Focus coil
- 24: Deflection coil
- 25: Scattering detector
- 31: Plate
- 32: Elevator
- 33: Powder supply mechanism
- 34: Accommodation tank
- 37: First heater (first heating unit)
- 38: Second heater (second heating unit)
- 39: Third heater (third heating unit)
- A: Powder material
- B: Electron beam
- R: Irradiation region

## Claims

1. An additive manufacturing device performing manufacturing of an additively manufactured article by supplying a powder material to an irradiation region of an energy beam, laying and leveling the powder material, irradiating the powder material with the energy beam, and melting the powder material, the additive manufacturing device comprising:
a beam emitting unit emitting the energy beam and irradiating the powder material with the energy beam;
an accommodation tank capable of accommodating the powder material and supplying the powder material to the irradiation region of the energy beam; and
a first heating unit attached to the accommodation tank and heating the powder material accommodated in the accommodation tank.

2. The additive manufacturing device according to claim 1 further comprising:
a second heating unit attached to a floor portion for the powder material discharged from the accommodation tank to be placed on and heating the powder material placed on the floor portion;
a powder supply mechanism provided in the irradiation region in a manner of being movable in a horizontal direction and supplying the powder material placed on the floor portion to the irradiation region; and
a third heating unit attached to the powder supply mechanism and heating the powder material to be supplied to the irradiation region.

3. An additive manufacturing method for performing manufacturing of an additively manufactured article by supplying a powder material to an irradiation region of an energy beam, laying and leveling the powder material, irradiating the powder material with the energy beam, and melting the powder material, the additive manufacturing method comprising:
a heating step of heating the powder material accommodated in an accommodation tank using the accommodation tank provided with a heating unit; and
a manufacturing step of manufacturing the article by irradiating the powder material with the energy beam after the powder material discharged from the accommodation tank is moved to the irradiation region of the energy beam.

4. The additive manufacturing device according to claim 1 further comprising:
a second heating unit attached to a floor portion for the powder material discharged from the accommodation tank to be placed on and heating the powder material placed on the floor portion.

5. The additive manufacturing device according to claim 1 further comprising:
a powder supply mechanism provided in the irradiation region in a manner of being movable in a horizontal direction and supplying the powder material placed on a floor portion for the powder material discharged from the accommodation tank to the irradiation region to be placed on; and
a third heating unit attached to the powder supply mechanism and heating the powder material to be supplied to the irradiation region.

6. The additive manufacturing device according to claim 1,
wherein the first heating unit is disposed inside the accommodation tank, and
wherein the first heating unit is disposed away from an inner wall surface of the accommodation tank.
